# EUROPEAN PATENT APPLICATION

(11) **EP 4 206 750 A1**
(43) Date of publication of application: **05.07.2023**
(21) Application number: 22217029.2
(22) Date of filing: 28.12.2022
(51) Int. Cl.: G01V 5/00

(54) **MOBILE INSPECTION APPARATUS AND MOBILE INSPECTION METHOD**

(30) Priority: 30.12.2021 CN 202111661878
(71) Applicant: Nuctech (Beijing) Company Limited, Beijing 101500 (CN); Nuctech Company Limited, TongFang Building Shuangqinglu Road Haidian District Beijing 100084 (CN)
(72) Inventor: FAN, Xuping, BEIJING, 100084 (CN); SHI, Junping, BEIJING, 100084 (CN); SONG, Quanwei, Beijing, 100084 (CN); MENG, Hui, BEIJING, 100084 (CN); HE, Yuan, BEIJING, 100084 (CN); YANG, Yang, Beijing, 100084 (CN)
(74) Representative: Gunzelmann, Rainer

(57) **Abstract**

A mobile inspection apparatus and a mobile inspection method are provided. The mobile inspection apparatus including: a moving body (100) arranged movably; a support assembly, mounted on the moving body (100), and configured to retract relative to the moving body (100) in a transport state of the mobile inspection apparatus and to extend relative to the moving body (100) in an inspection state of the mobile inspection apparatus; a ray source (5) and a detector (13) mounted on the support assembly; and a first drive device (4) configured to drive the support assembly to rotate relative to the moving body (100) so as to switch the ray source (5) and the detector (13) between a retracted position and an operating position, such that in the transport state, the ray source (5) and the detector (13) are located in the retracted position, and in the inspection state, the ray source (5) and the detector (13) are located in the operating position.

## Description

### TECHNICAL FIELD

The present disclosure relates to the field of scanning inspection technology, in particular to a mobile inspection apparatus and a mobile inspection method.

### BACKGROUND

At present, radiation scanning inspection has been widely used in the fields of medical and health care, national economy and scientific research. In customs, ports and other places, a radiation scanning inspection apparatus can also be used to inspect on-board cargo on vehicles, so that the cargo does not need to be unpacked during inspection, thus greatly improving inspection efficiency.

The scanning inspection apparatus is usually arranged at a fixed location, and vehicles carrying objects under inspection pass through a scanning passage to achieve inspection. However, long-term arrangement of a fixed immobile inspection apparatus is not suitable in some places. Therefore, a vehicle-mounted mobile inspection apparatus has emerged accordingly. To perform scanning inspection by the vehicle-mounted mobile inspection apparatus, a support frame is first unfolded to form a scanning passage, before scanning inspection begins. As the inspection apparatus is carried on a vehicle, in order to facilitate scanning inspection, the inspection apparatus is generally installed at a rear end of a vehicle chassis, resulting in a large load on a rear bearing, such that local stress is too large, which is liable to cause component damage and failure. Moreover, a main shaft of a chassis vehicle is usually very long and liable to exceed a length required for traveling on the road, and is low in safety.

It is to be noted that the information in the background section of the present disclosure is only intended to enhance understanding of the general background of the present disclosure, and should not be considered as an admission or any form of implication that the information constitutes the prior art known to those skilled in the art.

### SUMMARY

Embodiments of the present disclosure provide a mobile inspection apparatus and a mobile inspection method, which can reduce the length of an inspection apparatus in a transport state.

According to an aspect of the present disclosure, a mobile inspection apparatus is provided, including: a moving body arranged movably; a support assembly, mounted on the moving body, and configured to retract relative to the moving body in a transport state of the mobile inspection apparatus and to extend relative to the moving body in an inspection state of the mobile inspection apparatus; a ray source and a detector mounted on the support assembly; and a first drive device configured to drive the support assembly to rotate relative to the moving body so as to switch the ray source and the detector between a retracted position and an operating position, such that in the transport state, the ray source and the detector are located in the retracted position, and in the inspection state, the ray source and the detector are located in the operating position.

In some embodiments, the first drive device is configured to drive the ray source and the detector to move to positions arranged along a moving direction of the moving body in the retracted position; and drive the ray source and the detector to respectively move to two sides of the moving body in the operating position.

In some embodiments, the ray source and the detector are arranged at such positions that in the retracted position, a target point of the ray source and a mounting plane of the detector are located on a same side of a first plane, and the first plane is parallel to the moving direction of the moving body and passes through the center of rotation of the support assembly.

In some embodiments, the support assembly includes a first support member and a second support member, the ray source is mounted on the first support member, the detector is mounted on the second support member, and the first support member and the second support member are both in drive connection with the first drive device.

In some embodiments, the first drive device is configured to drive the first support member and the second support member to rotate simultaneously or to respectively drive the first support member and the second support member to rotate independently relative to each other.

In some embodiments, the first support member includes a cantilevered portion extending beyond the moving body, and the ray source is mounted on the cantilevered portion.

In some embodiments, the first support member includes a first support portion and a second support portion, the first support portion is in drive connection with the first drive device, and the second support portion is movable relative to the first support portion to adjust the length of the first support member.

In some embodiments, the support assembly further includes a second drive device, and the second drive device is connected to the second support portion to drive the second support portion to move relative to the first support portion.

In some embodiments, the support assembly further includes a guide member arranged between the first support portion and the second support portion, and the guide member is configured to guide the movement of the second support portion.

In some embodiments, the guide member includes a guide rail, a width of the first support portion is greater or smaller than a width of the second support portion, and the second support portion is slidably cooperating with the first support portion by means of the guide rail.

In some embodiments, the mobile inspection apparatus further includes a first cabin, wherein the first cabin is mounted on the moving body, the second support member includes a third support portion and a fourth support portion, the first drive device is arranged in the first cabin, the third support portion is in drive connection with the first drive device, and the fourth support portion is supported on a top of the first cabin in the transport state.

In some embodiments, the mobile inspection apparatus further includes a second cabin, wherein the second cabin is mounted on the first support member, the ray source is arranged in the second cabin, and in the transport state, the first cabin and the second cabin are in contact with each other or there is a preset gap between the first cabin and the second cabin.

In some embodiments, there is a preset distance between a side of the first cabin close to the second cabin and a side of the moving body close to the second cabin to form a projection at an end of the moving body close to the second cabin, and a lower part of a side of the second cabin close to the first cabin is provided with a recess, and the projection is embedded into the recess in the transport state.

In some embodiments, the moving body includes a vehicle chassis.

According to another aspect of the present disclosure, a mobile inspection method based on the above-mentioned mobile inspection apparatus is provided, including: providing a movable moving body and a support assembly mounted on the moving body; extending the support assembly relative to the moving body; after extending, driving the support assembly to rotate relative to the moving body by a first drive device so that a ray source and a detector rotate from a retracted position to an operating position; starting the ray source and the detector to perform scanning inspection on an object to be inspected; after completion of the inspection, driving the support assembly to rotate relative to the moving body by the first drive device so that the ray source and the detector return from the operating position to the retracted position; and then retracting the support assembly relative to the moving body.

Based on the above technical solutions, in embodiments of the present disclosure, the support assembly is capable of extending and retracting relative to the moving body. In the inspection state, the support assembly extends to facilitate the rotation of the support assembly relative to the moving body so as to rotate the ray source and the detector to the operating position. In the transport state, the support assembly retracts to shorten the overall length of the mobile inspection apparatus so as to meet the requirement of traveling on the road, and to be conducive to improving the safety during transport.

### BRIEF DESCRIPTION OF THE DRAWINGS

The drawings described here are used to provide further understanding of the present disclosure and form a part of the present disclosure. The illustrative embodiments of the present disclosure and description thereof are used for explaining rather than unduly limiting the present disclosure. In the drawings:
Fig. 1 is a front-view diagram of an embodiment of a mobile inspection apparatus of the present disclosure in a transport state.
Fig. 2 is a left-view diagram of an embodiment of a mobile inspection apparatus of the present disclosure in a transport state.
Fig. 3 is a top-view diagram of an embodiment of a mobile inspection apparatus of the present disclosure in a transport state.
Fig. 4 is a front-view diagram of an embodiment of a mobile inspection apparatus of the present disclosure in a first intermediate state.
Fig. 5 is a left-view diagram of an embodiment of a mobile inspection apparatus of the present disclosure in a first intermediate state.
Fig. 6 is a top-view diagram of an embodiment of a mobile inspection apparatus of the present disclosure in a first intermediate state.
Fig. 7 is a front-view diagram of an embodiment of a mobile inspection apparatus of the present disclosure in a second intermediate state.
Fig. 8 is a left-view diagram of an embodiment of a mobile inspection apparatus of the present disclosure in a second intermediate state.
Fig. 9 is a top-view diagram of an embodiment of a mobile inspection apparatus of the present disclosure in a second intermediate state.
Fig. 10 is a front-view diagram of an embodiment of a mobile inspection apparatus of the present disclosure in a third intermediate state.
Fig. 11 is a left-view diagram of an embodiment of a mobile inspection apparatus of the present disclosure in a third intermediate state.
Fig. 12 is a top-view diagram of an embodiment of a mobile inspection apparatus of the present disclosure in a third intermediate state.
Fig. 13 is a front-view diagram of an embodiment of a mobile inspection apparatus of the present disclosure in an inspection state.
Fig. 14 is a left-view diagram of an embodiment of a mobile inspection apparatus of the present disclosure in an inspection state.
Fig. 15 is a top-view diagram of an embodiment of a mobile inspection apparatus of the present disclosure in an inspection state.
Fig. 16 is a structural diagram illustrating a second support portion retracting relative to a first support portion in an embodiment of a mobile inspection apparatus of the present disclosure.
Fig. 17 is a structural diagram illustrating a second support portion extending relative to a first support portion in an embodiment of a mobile inspection apparatus of the present disclosure.
Fig. 18 is a structural diagram illustrating a second support portion retracting relative to a first support portion in another embodiment of a mobile inspection apparatus of the present disclosure.
Fig. 19 is a structural diagram illustrating a second support portion extending relative to a first support portion in another embodiment of a mobile inspection apparatus of the present disclosure.

### Reference numerals:

1, first cabin; 2, second cabin; 3, first support member; 4, first drive device; 5, ray source; 6, fourth support portion; 7, third support portion; 8, first detection arm; 9, second detection arm; 10, object under inspection; 11, target point; 12, second support member; 31, first support portion; 32, second support portion; 33, second drive device; 34, guide rail.

### DETAILED DESCRIPTION

Technical solutions in the embodiments will be described below clearly and completely in conjunction with the accompanying drawings in the embodiments of the present disclosure. Obviously, the described embodiments are only a part of the embodiments of the present disclosure, and not all the embodiments. Based on the embodiments in the present disclosure, all of other embodiments obtained by those of ordinary skill in the art without creative work should fall into the protection scope of the present disclosure.

In description of the invention in present disclosure, it should be understood that orientation or position relations denoted by the terms "center", "transverse", "longitudinal", "front", "rear", "left", "right", "upper", "lower", "vertical", "horizontal", "top", "bottom", "inner", "outer" and the like are orientation or position relations illustrated based on the drawings, and are merely for the convenience of describing the invention in present disclosure and simplifying description, instead of indicating or implying the denoted devices or elements must have specific orientations or be constructed and operated in specific orientations, and thus the terms cannot be construed as limiting the protection scope of the invention in present disclosure.

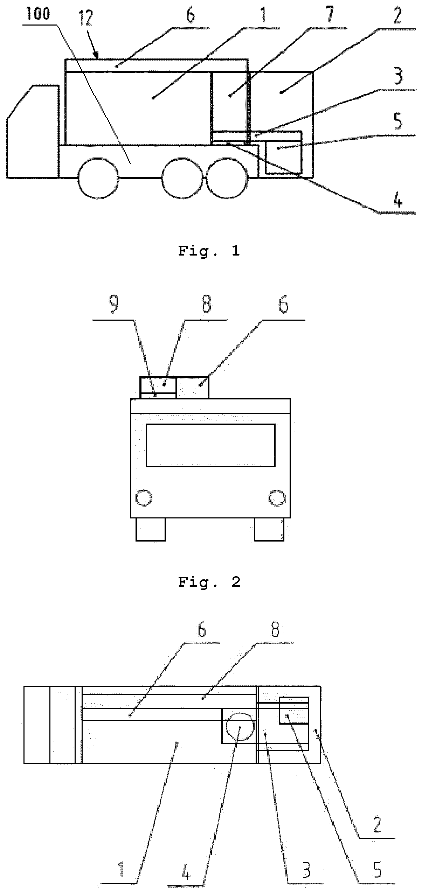

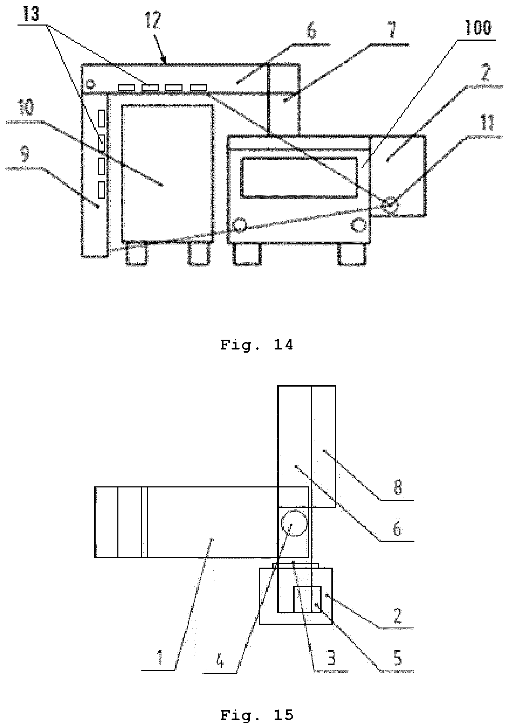

Referring to Figs. 1 to 15, in some embodiments of a mobile inspection apparatus provided in the present disclosure, the inspection apparatus includes a moving body 100, a support assembly, a ray source 5, a detector 13, and a first drive device 4. The moving body 100 is arranged movably. The support assembly is mounted on the moving body 100, and the support assembly is configured to retract relative to the moving body 100 in a transport state of the mobile inspection apparatus and to extend relative to the moving body 100 in an inspection state of the mobile inspection apparatus. The ray source 5 and the detector 13 are both mounted on the support assembly. The first drive device 4 is configured to drive the support assembly to rotate relative to the moving body 100 so as to switch the ray source 5 and the detector 13 between a retracted position and an operating position, such that in the transport state, the ray source 5 and the detector 13 are in the retracted position, and in the inspection state, the ray source 5 and the detector 13 are in the operating position.

In the above embodiment, the support assembly is capable of extending and retracting relative to the moving body 100. In the inspection state, the support assembly extends to facilitate the rotation of the support assembly relative to the moving body 100 so as to rotate the ray source 5 and the detector 13 to the operating position. In the transport state, the support assembly retracts to shorten the overall length of the mobile inspection apparatus so as to meet the requirement of traveling on the road, and to be conducive to improving the safety during transport.

The support assembly is configured as a structure capable of extending and retracting relative to the moving body 100, such that the center of gravity of the moving body 100 is shifted forward. In this way, a load on a rear axle can be reduced, thereby improving the force-bearing condition of the axle and improving the overall steadiness of the inspection apparatus.

In some embodiments, in the retracted position, the first drive device 4 is configured to drive the ray source 5 and the detector 13 to move to positions arranged along a moving direction of the moving body 100. This configuration facilitates retraction of the ray source 5 and the detector 13 into the range of the moving body 100, to prevent interference or collision with other items during transport.

In the operating position, the first drive device 4 is configured to drive the ray source 5 and the detector 13 to move to two sides of the moving body 100, respectively. This configuration facilitates relative deployment of the ray source 5 and the detector 13, and an inspection passage between the ray source 5 and the detector 13 can be formed to facilitate implementation of inspection. The ray source 5 and the detector 13 being located on two sides of the moving body 100 respectively can also achieve a counterweight balance of the two sides of the moving body 100, to avoid tipping over of the moving body 100.

In some embodiments, the ray source 5 and the detector 13 are arranged at such positions that in the retracted position, a target point 11 of the ray source 5 and a mounting plane of the detector 13 are located on a same side of a first plane. The first plane is parallel to the moving direction of the moving body 100 and passes through the center of rotation of the support assembly. An advantage of this configuration is that when the ray source 5 and the detector 13 move from the retracted position to the operating position, the ray source 5 and the detector 13 are just at opposite positions, therefore it is convenient to cause the detector 13 to receive a ray emitted by the ray source 5 without special adjustment, which is conducive to saving adjustment time and improving inspection efficiency.

In some embodiments, the support assembly includes a first support member 3 and a second support member 12. The ray source 5 is mounted on the first support member 3, and the detector 13 is mounted on the second support member 12. The first support member 3 and the second support member 12 are both in drive connection with the first drive device 4.

By providing the two individual support members, the ray source 5 and the detector 13 can be independently supported, respectively, to facilitate performing structural designs thereof, respectively.

In some embodiments, the first support member 3 and the second support member 12 are interconnected into a whole, which facilitates the first drive device 4 driving the first support member 3 and the second support member 12 to rotate together. In this way, the movements of the first support member 3 and the second support member 12 can be synchronized, thus keeping rotations of the ray source 5 and the detector 13 synchronized.

In some other embodiments, the first support member 3 and the second support member 12 are independent relative to each other, and the first support member 3 and the second support member 12 are capable of moving relative to each other. This facilitates the first drive device 4 respectively driving the first support member 3 and the second support member 12 to rotate independently relative to each other, thereby adjusting relative positions of the ray source 5 and the detector 13 in real time as needed to meet the inspection requirement.

In an embodiment where the first drive device 4 respectively drives the first support member 3 and the second support member 12 to rotate independently relative to each other, the first drive device 4 can include a first drive member for driving the first support member 3 to rotate and a second drive member for driving the second support member 12 to rotate. The structures of the first drive member and the second drive member may be same or different.

The first drive device 4 can be a rotary drive element such as a revolving platform.

In some embodiments, the first support member 3 includes a cantilevered portion extending beyond the moving body 100, and the ray source 5 is mounted to the cantilevered portion. The cantilevered portion for supporting the ray source 5 is suspended at a rear side of the moving body 100 and is located outside the moving body 100. This configuration facilitates formation of an inspection passage between the ray source 5 and the detector 13 when the ray source 5 is rotated to the operating position, to avoid the presence of other components between the ray source 5 and the detector 13, which otherwise affects ray transmission and inspection quality.

In some embodiments, the first support member 3 includes a first support portion 31 and a second support portion 32. The first support portion 31 is in drive connection with the first drive device 4, and the second support portion 32 is movable relative to the first support portion 31 to adjust the length of the first support member 3.

For example, the first support portion 31 is fixed relative to the moving body 100, and the second support portion 32 is retractable relative to the first support portion 31 so as to adjust the length of the first support member 3, thereby adjusting the length of the support assembly and the overall length of the inspection apparatus.

In some embodiments, the support assembly further includes a second drive device 33. The second drive device 33 is connected to the second support portion 32 to drive the second support portion 32 to move relative to the first support portion 31. The second drive device 33 can be an oil cylinder, an air cylinder, an electric drive pusher, or the like.

A gear-chain, gear-rack or other transmission mechanism can also be provided between the second drive device 33 and the second support portion 32 to achieve transmission of motive power.

In some embodiments, the support assembly further includes a guide member arranged between the first support portion 31 and the second support portion 32. The guide member is configured to guide the movement of the second support portion 32.

By providing the guide member, the movement of the second support portion 32 can be guided so that the second support portion 32 moves along a preset route to improve the accuracy and reliability of the movement.

In some embodiments, the guide member includes a guide rail 34, the width of the first support portion 31 is greater or smaller than the width of the second support portion 32, the second support portion 32 is slidably cooperating with the first support portion 31 by means of the guide rail 34.

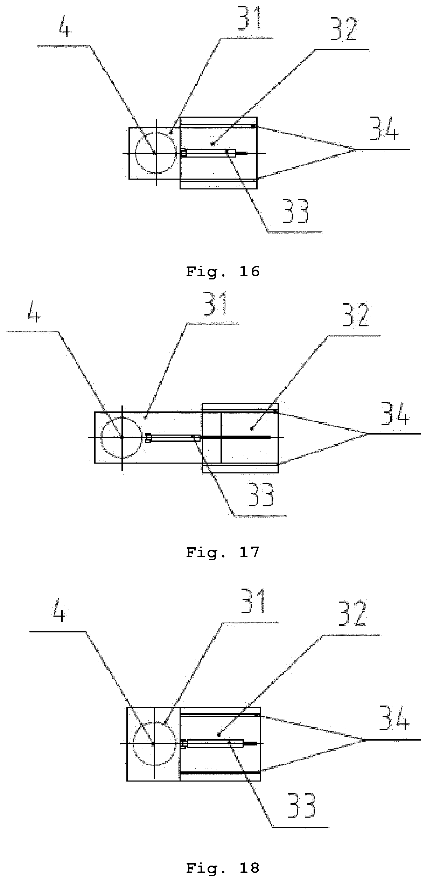

As shown in Figs. 16 and 17, the width of the first support portion 31 is smaller than the width of the second support portion 32, and the second support portion 32 extends/retracts along the guide rail relative to the first support portion 31.

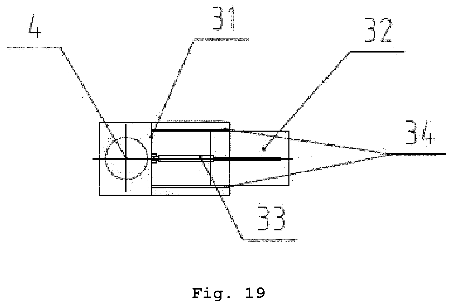

As shown in Figs. 18 and 19, the width of the first support portion 31 is greater than the width of the second support portion 32, and the second support portion 32 extends/retracts along the guide rail relative to the first support portion 31.

The guide rail may be a structure of two sets of rails cooperating with each other, or a structure of a rail and a slider cooperating with the slider, which will not be detailed here.

In other embodiments, the first support portion 31 and the second support portion 32 may also cooperate with each other in a rolling manner. For example, a rolling bearing is provided between the first support portion 31 and the second support portion 32.

In some embodiments, the mobile inspection apparatus further includes a first cabin 1. The first cabin 1 is mounted on the moving body 100. The second support member 12 includes a third support portion 7 and a fourth support portion 6. The first drive device 4 is arranged in the first cabin 1. The third support portion 7 is in drive connection with the first drive device 4. In the transport state, the fourth support portion 6 is supported on the top of the first cabin 1.

By providing the first cabin 1, components mounted on the moving body 100 and located inside the first cabin 1 can be protected. Moreover, the top of the first cabin 1 can also support the fourth support portion 6 in the transport state.

For example, the second support member 12 includes a third support portion 7 arranged vertically and a fourth support portion 6 arranged horizontally, and the fourth support portion 6 is connected to the third support portion 7. The third support portion 7 is a vertically extensible structure. In the inspection state, the third support portion 7 is vertically lengthened, and in the transport state, the third support portion 7 is vertically shortened so that the fourth support portion 6 can be supported on the top of the first cabin 1.

The second support member 12 can further include a first detection arm 8 and a second detection arm 9. The first detection arm 8 is arranged horizontally and mounted to a side of the fourth support portion 6. The second detection arm 9 is rotatably connected to the first detection arm 8. In the transport state, the second detection arm 9 is folded relative to the first detection arm 8, and the second detection arm 9 is rotated to a position parallel to the first detection arm 8, and the second detection arm 9 is located below the first detection arm 8. In the inspection state, the second detection arm 9 is unfolded relative to the first detection arm 8, and the second detection arm 9 is rotated to a position perpendicular to the first detection arm 8, such that a foldable portal frame is formed by the first detection arm 8, the second detection arm 9, the third support portion 7 and the fourth support portion 6 together, and an inspection passage is formed by the vertically arranged third support portion 7 and the second detection arm 9.

Detectors 13 are provided on both the first detection arm 8 and the second detection arm 9 to receive a ray emitted by the ray source 5.

In other embodiments, the second support member 12 may also be other feasible structure.

In some embodiments, the mobile inspection apparatus further includes a second cabin 2. The second cabin 2 is mounted on the first support member 3, and the ray source 5 is arranged in the second cabin 2. The second cabin 2 is provided with a through hole aligned with an outgoing port of the ray source 5 to facilitate ray emission.

By providing the second cabin 2, the ray source 5 can be effectively protected. Furthermore, the second cabin 2 together with the first cabin 1 forms an entire cabin of the inspection apparatus.

In some embodiments, a portion of the ray source 5 is arranged inside the second cabin 2, and another portion thereof is arranged outside the second cabin 2. For example, the ray source 5 is arranged at the bottom of the second cabin 2, and a lower part of the ray source 5 is exposed from the bottom of the second cabin 2. In this way, the ray source 5 can be protected, and ray emission of the ray source 5 is not affected.

In some embodiments, the first cabin 1 and the second cabin 2 are in contact with each other in the transport state to avoid a gap between the first cabin 1 and the second cabin 2, which otherwise affects aesthetics.

The first cabin 1 and the second cabin 2 being in contact with each other may mean that a rear side of the first cabin 1 and a front side of the second cabin 2 are entirely in contact with each other, or only left and right side plates of the first cabin 1 and left and right side plates of the second cabin 2 are in partial contact with each other.

In some embodiments, there is a preset gap between the first cabin 1 and the second cabin 2 in the transport state. The gap can be convenient for rotation of the second cabin 2 and is relatively easy to implement in manufacturing.

In some embodiments, there is a preset distance between a side of the first cabin 1 close to the second cabin 2 and a side of the moving body 100 close to the second cabin 2. That is, the first cabin 1 is not arranged at an edge of the moving body 100. This preset distance allows a projection 14 to be formed at an end of the moving body 100 close to the second cabin 2. A lower part of a side of the second cabin 2 close to the first cabin 1 is provided with a recess 15. In this way, in the transport state, the projection 14 is embedded into the recess 15, and the recess 15 is just lapped on a rear side of the moving body 100, so that the moving body 100 can partially support the second cabin 2.

In some embodiments, the moving body 100 includes a vehicle chassis. The bottom of the vehicle chassis is equipped with a plurality of wheels, which can travel relative to the ground. The wheels are arranged at the bottom of the moving body 100. The bottom of the second cabin 2 is not equipped with wheels, and the bottom of the second cabin 2 is suspended in the air after the support assembly is extended.

A working process of an embodiment of the mobile inspection apparatus of the present disclosure is described below in conjunction with Figs. 1 to 15:

In the following, description will be made using the moving direction of the moving body 100 as a reference direction. The moving direction serves as forward direction and the inverse direction of the moving direction serves as backward direction.

First, as shown in Figs. 1 to 3, in the transport state, the support assembly is rotated to a direction parallel to the moving direction of the moving body 100, such that the first support member 3 is in the rear and the second support member 12 is in the front. The second support portion 32 of the first support member 3 is retracted with respect to the first support portion 31 (see, for example, referring to Figs. 16 and 18), and the front side of the second cabin 2 is in close contact with the rear side of the first cabin 1. The second detection arm 9 of the second support member 12 is rotatably arranged below the first detection arm 8, the third support portion 7 is vertically lowered, and the fourth support portion 6, the first detection arm 8 and the second detection arm 9 are supported on the top of the first cabin 1.

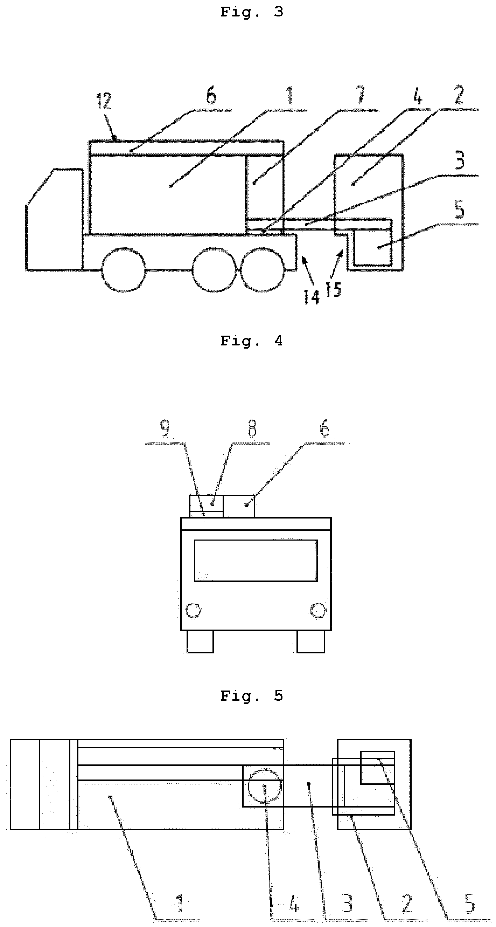

Subsequently, as shown in Figs. 4-6, the second drive device 33 drives the second support portion 32 to extend rearward relative to the first support portion 31, such that the second cabin 2 leaves the first cabin 1, and the inspection apparatus enters a first intermediate state, at which time the second support member 12 remains motionless (see, for example, referring to Figs. 17 and 19).

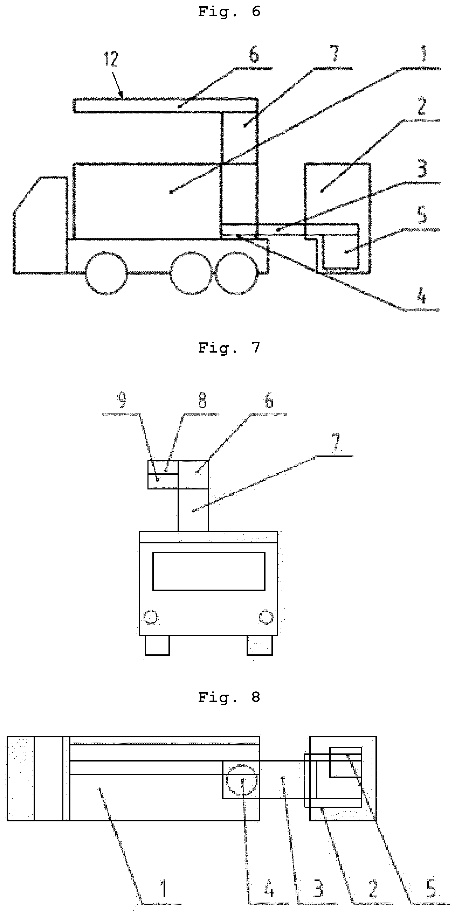

Then, as shown in Figs. 7-9, the third support portion 7 of the second support member 12 is vertically raised, such that the fourth support portion 6, the first detection arm 8 and the second detection arm 9 all leave the top of the first cabin 1, and the inspection apparatus enters a second intermediate state.

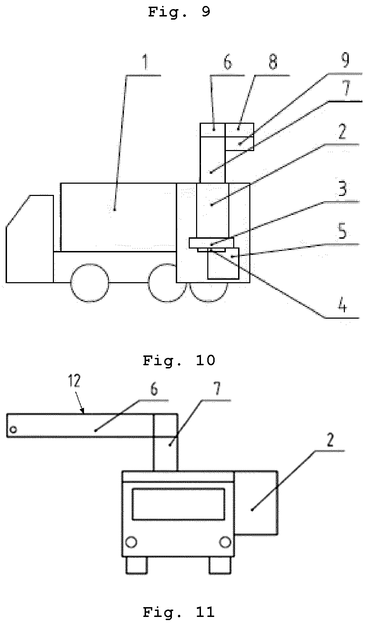

Then, as shown in Figs. 10-12, the first drive device 4 drives the support assembly to rotate relative to the moving body 100, and the support assembly rotates to a direction perpendicular to the moving direction of the moving body 100, such that the ray source 5 and the detector 13 are located on two sides of the moving body 100, respectively, and the inspection apparatus enters a third intermediate state.

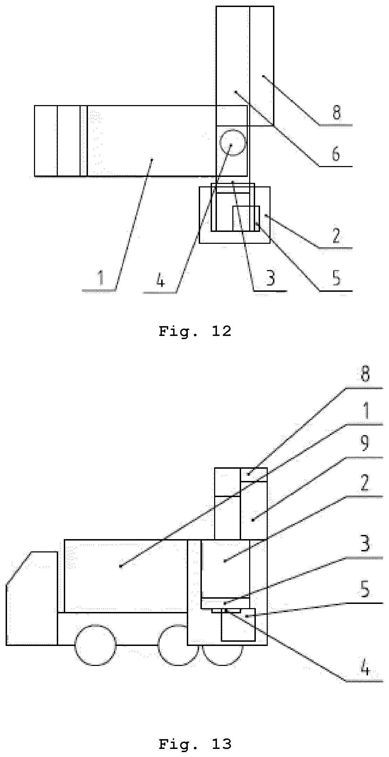

Finally, as shown in Figs. 13-15, the second detection arm 9 is unfolded relative to the first detection arm 8, and the second detection arm 9 rotates to a vertical direction, such that an inspection passage is formed between the third support portion 7 and the second detection arm 9. A ray emitted by the ray source 5 is irradiated on an object under inspection 10, and the ray projected or reflected by the object under inspection 10 is received by the detector 13 to implement scanning inspection of the object under inspection 10. By analyzing a signal received by the detector 13, it can be determined whether the object under inspection 10 contains a prohibited substance.

In some embodiments, after the first drive device 4 drives the support assembly to rotate relative to the moving body 100, and the support assembly rotates to the direction perpendicular to the moving direction of the moving body 100, such that the ray source 5 and the detector 13 are located on two sides of the moving body 100, respectively, the third support portion 7 of the second support member 12 can be raised vertically, such that the fourth support portion 6, the first detector 13 arm 8 and the second detector 13 arm 9 all leave the top of the first cabin 1.

In some other embodiments, while the second drive device 33 drives the second support portion 32 to extend rearward relative to the first support portion 31, the first drive device 4 can drive the support assembly to rotate relative to the moving body 100. The extension and the rotation occur and end at the same time. Likewise, retraction and rotation also occur and end at the same time.

The present disclosure also provides a mobile inspection method, the method including:
providing a movable moving body 100 and a support assembly mounted on the moving body 100;
extending the support assembly relative to the moving body 100;
after extending, driving the support assembly to rotate relative to the moving body 100 by a first drive device 4 so that a ray source 5 and a detector 13 rotate from a retracted position to an operating position;
starting the ray source 5 and the detector 13 to perform scanning inspection on an object to be inspected;
after completion of the inspection, driving the support assembly to rotate relative to the moving body 100 by the first drive device 4 so that the ray source 5 and the detector 13 return from the operating position to the retracted position; and
then, retracting the support assembly relative to the moving body 100.

The positive technical effects of the mobile inspection apparatus in the embodiments described above are also applicable to the mobile inspection method, and are not repeated here.

Finally, it should be noted that the above embodiments are only used for describing rather than limiting the technical solutions of the present disclosure. Although the present disclosure is described in detail with reference to the preferred embodiments, those of ordinary skill in the art should understand that they still can make modifications to the specific implementations in the present disclosure or make equivalent substitutions to part of technical features thereof without departing from the principle of the present disclosure. Such modifications and equivalent substitutions should be encompassed within the technical solutions sought for protection in the present disclosure.

## Claims

1. A mobile inspection apparatus, **characterized by** comprising:
a moving body (100) arranged movably;
a support assembly, mounted on the moving body (100), and configured to retract relative to the moving body (100) in a transport state of the mobile inspection apparatus and to extend relative to the moving body (100) in an inspection state of the mobile inspection apparatus;
a ray source (5) and a detector (13) mounted on the support assembly; and
a first drive device (4) configured to drive the support assembly to rotate relative to the moving body (100) so as to switch the ray source (5) and the detector (13) between a retracted position and an operating position, such that in the transport state, the ray source (5) and the detector (13) are located in the retracted position, and in the inspection state, the ray source (5) and the detector (13) are located in the operating position.

2. The mobile inspection apparatus according to claim 1, wherein the first drive device (4) is configured to drive the ray source (5) and the detector (13) to move to positions arranged along a moving direction of the moving body (100) in the retracted position; and drive the ray source (5) and the detector (13) to respectively move to two sides of the moving body (100) in the operating position.

3. The mobile inspection apparatus according to claim 1 or 2, wherein the ray source (5) and the detector (13) are arranged at such positions that in the retracted position, a target point (11) of the ray source (5) and a mounting plane of the detector (13) are located on a same side of a first plane, and the first plane is parallel to the moving direction of the moving body (100) and passes through the center of rotation of the support assembly.

4. The mobile inspection apparatus according to any one of claims 1 to 3, wherein the support assembly comprises a first support member (3) and a second support member (12), the ray source (5) is mounted on the first support member (3), the detector (13) is mounted on the second support member (12), and the first support member (3) and the second support member (12) are both in drive connection with the first drive device (4).

5. The mobile inspection apparatus according to claim 4, wherein the first drive device (4) is configured to drive the first support member (3) and the second support member (12) to rotate simultaneously or to respectively drive the first support member (3) and the second support member (12) to rotate independently relative to each other.

6. The mobile inspection apparatus according to claim 4 or 5, wherein the first support member (3) comprises a cantilevered portion extending beyond the moving body (100), and the ray source (5) is mounted on the cantilevered portion.

7. The mobile inspection apparatus according to any one of claims 4 to 6, wherein the first support member (3) comprises a first support portion (31) and a second support portion (32), the first support portion (31) is in drive connection with the first drive device (4), and the second support portion (32) is movable relative to the first support portion (31) to adjust the length of the first support member (3).

8. The mobile inspection apparatus according to claim 7, wherein the support assembly further comprises a second drive device (33), and the second drive device (33) is connected to the second support portion (32) to drive the second support portion (32) to move relative to the first support portion (31).

9. The mobile inspection apparatus according to claim 7 or 8, wherein the support assembly further comprises a guide member arranged between the first support portion (31) and the second support portion (32), and the guide member is configured to guide the movement of the second support portion (32).

10. The mobile inspection apparatus according to claim 9, wherein the guide member comprises a guide rail (34), a width of the first support portion (31) is greater or smaller than a width of the second support portion (32), and the second support portion (32) is slidably cooperating with the first support portion (31) by means of the guide rail (34).

11. The mobile inspection apparatus according to any one of claims 4 to 10, further comprising a first cabin (1), wherein the first cabin (1) is mounted on the moving body (100), the second support member (12) comprises a third support portion (7) and a fourth support portion (6), the first drive device (4) is arranged in the first cabin (1), the third support portion (7) is in drive connection with the first drive device (4), and the fourth support portion (6) is supported on a top of the first cabin (1) in the transport state.

12. The mobile inspection apparatus according to claim 11, further comprising a second cabin (2), wherein the second cabin (2) is mounted on the first support member (3), the ray source (5) is arranged in the second cabin (2), and in the transport state, the first cabin (1) and the second cabin (2) are in contact with each other or there is a preset gap between the first cabin (1) and the second cabin (2).

13. The mobile inspection apparatus according to claim 12, wherein there is a preset distance between a side of the first cabin (1) close to the second cabin (2) and a side of the moving body (100) close to the second cabin (2) to form a projection (14) at an end of the moving body (100) close to the second cabin (2), and a lower part of a side of the second cabin (2) close to the first cabin (1) is provided with a recess (15), and the projection (14) is embedded into the recess (15) in the transport state.

14. The mobile inspection apparatus according to any one of claim 1 to 13, wherein the moving body (100) comprises a vehicle chassis.

15. A mobile inspection method based on the mobile inspection apparatus of any one of claims 1 to 14, **characterized by** comprising:
providing a movable moving body (100) and a support assembly mounted on the moving body (100);
extending the support assembly relative to the moving body (100);
after extending, driving the support assembly to rotate relative to the moving body (100) by a first drive device (4) so that a ray source (5) and a detector (13) rotate from a retracted position to an operating position;
starting the ray source (5) and the detector (13) to perform scanning inspection on an object to be inspected;
after completion of the inspection, driving the support assembly to rotate relative to the moving body (100) by the first drive device (4) so that the ray source (5) and the detector (13) return from the operating position to the retracted position; and then
retracting the support assembly relative to the moving body (100) .
